# EUROPEAN PATENT APPLICATION

(11) **EP 4 592 642 A1**
(43) Date of publication of application: **30.07.2025**
(21) Application number: 25154298.1
(22) Date of filing: 28.01.2025
(51) Int. Cl.: G01C 21/34

(54) **NARROW ROADWAY CAR MEETING ASSISTANCE METHOD AND SYSTEM**

(30) Priority: 29.01.2024 CN 202410122565
(71) Applicant: Bayerische Motoren Werke Aktiengesellschaft, 80809 München (DE)
(72) Inventor: Liu, Bridge, Beijing, 100194 (CN); Chen, Kefeng, Suzhou (CN); Hu, Neo, Beijing, 100872 (CN); Xun, Lisa, Beijing (CN); Yang, Kelly, Beijing, 101300 (CN)

(57) **Abstract**

Provided is a full roadway car meeting assistance method and system. The method comprises: (a) providing one or more candidate navigation routes for user selection based, at least in part, on narrow road information, wherein the narrow road information includes one or more of a length of a narrow road, historical average passing through time, historical median passing through time, historical minimum passing through time, or historical maximum passing through time; and (b) prompting one or more better candidate navigation routes based on a comparison between the candidate navigation route selected by the user that includes narrow road(s) and the remaining candidate navigation route(s) of the one or more candidate navigation routes that does not include narrow road(s). The method further comprises providing a car meeting assistance prompt based, at least in part, on a car meeting status relative to a narrow road of a current vehicle and/or an opposite vehicle and car meeting point information of the narrow road.

## Description

### FIELD OF THE INVENTION

The present invention relates to car meeting assistance, and more particularly to a full roadway car meeting assistance method and system.

### BACKGROUND OF THE INVENTION

The popularity of navigation technology has greatly facilitated the driver's driving experience. Existing navigation systems are able to prompt the driver of the next driving action (e.g., left turn/right turn/going ahead/lane change, etc.), which enables the driver to make optimal driving plans on urban roads even if he/she is unfamiliar with the current road.

Car meeting is one of the most common scenarios encountered while driving. Specifically, car meeting is a traffic term that refers to the simultaneous staggered passage of vehicles (e.g., cars, trains, etc.) traveling in opposite directions at a particular location. In practice, when meeting on narrower roads (e.g. roads where two vehicles traveling in opposite directions cannot pass in parallel), generally speaking, the driver, after entering the narrow road, passes slowly by judging accurately the distance to the right side of the road; or the driver, after entering the r narrow road and finding that he/she is unable to or is not sure of succeeding in the meeting by observing the road, has no alternative but to stop at a relatively wider position (e.g. stopping directly at that position or reversing to that position) and wait for the opposite vehicle to pass before proceeding.

In order to improve the safety and convenience of the car meeting, existing technologies provide some car meeting assistance systems. For example,CN112339663A proposes installing cameras on vehicles to assess the surroundings of opposite vehicles and provide driving advice when the cars meet,CN111976725A performs an analysis of high-risk curves and issues an alert,CN108133621A installs several warning devices at both sides of the road to send warning signals to nearby vehicles,CN116767244 performs car meeting judgments before the vehicle is about to reach a narrow road, such as prompting to wait in place when there is a vehicle in the opposite direction and there is no available meeting point, and so on.

Among them, CN112339663A, CN111976725A, and CN108133621A are unable to satisfy the situation when there is a need to meet on a narrower road (for example, a road on which two vehicles traveling in opposite directions are unable to pass in parallel, subsequently referred to as a narrow road), in particular in a rural area or in the event of a geological disaster and road construction. CN 116767244 will only be triggered when a vehicle is about to drive into a narrow road, and if there are more vehicles coming from the opposite direction at this time and there is no available meeting point on the narrow road, it will take a longer time to wait. Meanwhile, there is no effective and reasonable way to deal with the vehicle if the vehicle still travels into the narrow road due to network problems or operational errors.

### SUMMARY OF THE INVENTION

The present summary is provided to introduce some concepts that will be further described in the following specific embodiments in a simplified form. The present summary is not intended to identify key features or essential features of the claimed subject matter, nor is it intended to help determine the scope of the claimed subject matter.

According to an embodiment of the present invention, there is provided a car meeting assistance method comprising: (a) providing one or more candidate navigation routes for user selection based, at least in part, on narrow road information, wherein the narrow road information includes one or more of a length of a narrow road, historical average passing through time, historical median passing through time, historical minimum passing through time, or historical maximum passing through time; and (b) prompting one or more better candidate navigation routes based on a comparison between the candidate navigation route selected by the user that includes narrow road(s) and the remaining candidate navigation route(s) of the one or more candidate navigation routes that does not include narrow road(s).

According to another embodiment of the present invention, the method further comprises: (c) providing a car meeting assistance prompt based, at least in part, on a car meeting status relative to a narrow road of a current vehicle and/or an opposite vehicle and car meeting point information of the narrow road; wherein, the car meeting point information refers to at least one of whether there is a car meeting point on the narrow road, a location of the car meeting point, and a distance to the car meeting point, and the car meeting status of the vehicle refers to at least one of whether the vehicle is approaching the narrow road, whether the vehicle is already on the narrow road, and whether the vehicle is already off the narrow road.

According to another embodiment of the present invention, there is provided a car meeting assistance system comprising: navigation route recommendation module configured to: (a) provide one or more candidate navigation routes for user selection based, at least in part, on narrow road information, wherein the narrow road information includes one or more of a length of a narrow road, historical average passing through time, historical median passing through time, historical minimum passing through time, or historical maximum passing through time; and (b) prompt one or more better candidate navigation routes based on a comparison between the candidate navigation route selected by the user that includes narrow road(s) and the remaining candidate navigation route(s) of the one or more candidate navigation routes that does not include narrow road(s).

According to yet another embodiment of the present invention, the system further comprises a car meeting assistance module, said car meeting assistance module being configured to: (c) provide a car meeting assistance prompt based, at least in part, on a car meeting status relative to a narrow road of a current vehicle and/or an opposite vehicle and car meeting point information of the narrow road; wherein, the car meeting point information refers to at least one of whether there is a car meeting point on the narrow road, a location of the car meeting point, and a distance to the car meeting point, and the car meeting status of the vehicle refers to at least one of whether the vehicle is approaching the narrow road, whether the vehicle is already on the narrow road, and whether the vehicle is already off the narrow road.

These and other features and advantages will become apparent by reading the following detailed description and referring to the associated accompanying drawings. It should be understood that the foregoing summary of the invention and the following detailed description are merely illustrative and are not intended to limit the claimed aspects.

### BRIEF DESCRIPTION OF THE DRAWINGS

To well understand the above features of the present invention in details, reference can be made to various embodiments, so as to describe the summary of the invention above more specifically, some aspects of which are depicted in the accompanying drawings. However, it should be noted that the accompanying drawings only show some typical aspects of the present invention, and thus should not be considered as limiting the scope of the present invention, because this description may allow other equivalent aspects.
Figure 1 illustrates a block diagram of a full roadway car meeting assistance system 100 according to one embodiment of the present invention;
Figure 2 illustrates a situation where a meeting point exists on a narrow road according to one embodiment of the present invention;
Figure 3A-Figure 3C illustrate a situation where a current vehicle and an opposite vehicle have entered into a narrow road and there is no meeting point between the current vehicle and the opposite vehicle, according to one embodiment of the present invention;
Figure 4 illustrates a flowchart of a full roadway car meeting assistance method 400 according to one embodiment of the present invention;
Figure 5 further illustrates a method 500 for detailed description of stage 405 according to one embodiment of the present invention; and
Figure 6 illustrates a block diagram of an exemplary computing device according to one embodiment of the present invention.

### DETAILED DESCRIPTION

The present invention will be described in detail below in conjunction with the accompanying drawings, and the characteristics of the present invention will be further shown in the following detailed description.

The following specific description refers to the accompanying drawings that illustrate exemplary embodiments of the present invention. However, the scope of the present invention is not limited to these embodiments, but is instead defined by the appended claims. Thus, embodiments beyond those shown in the accompanying drawings, such as modified versions of the illustrated embodiments, may nevertheless be encompassed by the present invention.

References in the specification to "one embodiment", "an embodiment", "an example embodiment", etc., indicate that the embodiment described may include a particular feature, structure, or characteristic, but each embodiment may not necessarily include the particular feature, structure, or characteristic. Furthermore, these phrases may not necessarily refer to the same embodiment. Furthermore, when describing specific features, structures, or characteristics in conjunction with embodiments, it should be understood that within the knowledge of those skilled in the relevant field, specific features, structures, or characteristics can be implemented in conjunction with other embodiments, whether explicitly described or not.

For the convenience of explanation, this specification only describes in detail the embodiments of applying the technical solution of the present invention to "vehicles". However, those skilled in the art can fully understand that the technical solution of the present invention can be applied to any transportation means such as trains, subways, ships, etc. that may have "meeting" situations. Unless otherwise specified, the term "A or B" used in this specification refers to "A and B" and "A or B", rather than indicating that A and B are exclusive.

### Terminology Introduction:

Narrow road: In the context of this specification, "narrow road" refers to a road in which the whole roadway or a substantial part thereof is so narrow that two vehicles traveling in opposite directions cannot pass in parallel at the same time. In practice, "narrow road" may refer, for example, to a narrow country lane, a road under construction in both directions and/or in one direction, a road where a traffic accident has occurred in both directions and/or in one direction, a road where there are obstacles on the road in both directions and/or in one direction, or a road where a natural disaster (e.g., a mudslide) has occurred in both directions and/or in one direction.

Car meeting point: In practice, although most sections of a narrow road are very narrow, there may be a few section(s)which is wide enough to allow two vehicles traveling in opposite directions to pass each other in parallel at the same time, and in the context of this specification, such section(s) may be regarded as "car meeting point(s)". For example, "a car meeting point" may generally refer to a branch road adjacent to the narrow road, a building adjacent to narrow roads or other slightly wider sections of the narrow roads. Of course, there can be no car meeting point in a narrow road.

Navigation system: In the context of the specification, "navigation system" refers to a system/application that can provide navigation functions to the driver using the Global Navigation Satellite System (GNSS). Generally speaking, a "navigation system" may have the following functions: map query function, route planning/re-planning function, voice or screen-based navigation function, speed measurement function, positioning function, etc. In practice, a "navigation system" generally refers to a navigation system or application that can be downloaded to a mobile device (e.g., Gaode Maps, Baidu Maps, etc.) or an on-vehicle navigation system (e.g., BMW Maps).

User: In the context of the specification, "user" may refer to the driver who is driving the current vehicle, other person in the current vehicle, or a person using the navigation system.

Opposite Vehicle: In the context of the specification, "opposite vehicle" refers to a vehicle traveling from a direction opposite to the traveling direction of the current vehicle. In the case of multiple vehicles traveling in the opposite direction, "opposite vehicle" refers to the vehicle traveling in the opposite direction nearest to the current vehicle.

The present invention integrates narrow road information into the initial navigation route planning, which can prevent the vehicle entering into the narrow road to a certain extent. In addition, when the vehicle has entered into a narrow road and there is no car meeting point from the nearest vehicle in the opposite direction, the logic of reverse distance calculation is added, which well solves the problem that vehicles of both directions do not know how to optimize the car meeting under such a circumstance, thus avoiding the trouble that vehicles of both directions do not give way to each other. The present invention realizes full roadway car meeting assistance from initial navigation route planning, to preparing to enter into a narrow road, to having entered into the narrow road, and finally to a situation where there is no car meeting point between the vehicle and the opposite direction.

Further, the present invention does not require hardware improvements to the vehicle itself, incurring no additional hardware costs to the user. The present invention also does not require constructions to narrow roads, saving costs in road construction. At the same time, the present invention can be integrated into existing navigation systems and can be easily utilized without additional learning costs for the user.

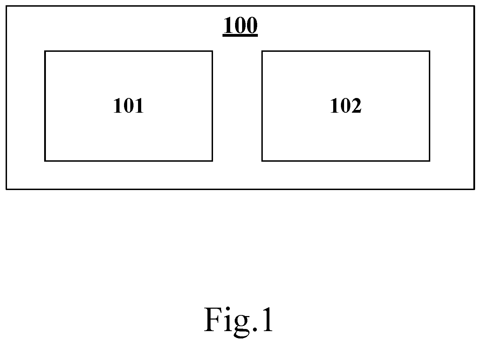

Figure 1 illustrates a block diagram of a full roadway car meeting assistance system 100 according to one embodiment of the present invention. According to an embodiment of the present invention, the system 100 may be integrated into an existing navigation system or application (e.g., a navigation application that can be downloaded to a mobile device, an on-vehicle navigation system, etc.) to provide a car meeting assistance function. According to another embodiment of the present invention, the system 100 may operate separately from an existing navigation system or application (e.g., may be implemented on a remote device, on a cloud service, etc.) to independently provide the car meeting assistance function or work in concert with an existing navigation system to provide the car meeting assistance function.

As illustrated in Figure 1, the full roadway car meeting assistance system 100 may include a navigation route recommendation module 101 and a car meeting assistance module 102. It will be fully understood by those skilled in the art that the present invention is being construed for the purpose of clarity only. The functionality of one or more of the above modules may be combined into a single module or split into multiple modules. And, one or more of the above modules may be implemented by way of software, hardware, or a combination thereof. Moreover, the data transmission between modules can adopt methods known in this field, which are not within the scope of the present invention.

According to an embodiment of the present invention, the navigation route recommendation module 101 may be configured to provide one or more candidate navigation routes based, at least in part, on narrow road information, each candidate navigation route including at least estimated time and/or estimated distance for the candidate navigation route.

Specifically, the navigation route recommendation module 101 may determine whether each candidate navigation route includes narrow road(s), and in the event that a candidate navigation route includes narrow road(s), calculate estimated time and/or estimated distance for the candidate navigation route based on at least narrow road information for the narrow road(s). In general, narrow road information for a narrow road may include a length of the narrow road, historical average passing through time, historical median passing through time, historical minimum passing through time, or historical maximum passing through time. In practice, specific narrow road information may be selected based on user preferences and/or system settings for calculating estimated time and/or estimated distance.

For example, if a candidate navigation route includes road A, road B, and road C. Generally, the estimated time for the candidate navigation route is roughly the estimated time for road A + the estimated time for road B + the estimated time for road C. Currently, in most cases, the estimated time for a road is calculated as the length of the road divided by the current average speed of vehicles on the road. However, in the present invention, if a road B is identified based on background information as a narrow road, the estimated time for road B may be based on narrow road information for road B (e.g., historical average passing through time, historical median passing through time, historical minimum passing through time, or historical maximum passing through time), and may be calculated differently than the estimated time for road A and road C.

Further, the navigation route selection module 101 may be configured to, based on the user's selection of a candidate navigation route of the one or more candidate navigation routes, in the event that the selected candidate navigation route includes narrow road(s) and there is remaining non-narrow road candidate navigation route(s) that does not includes narrow road(s) in the one or more candidate navigation routes, compare the estimated time and/or estimated distance of the selected candidate navigation route with the estimated time and/or estimated distance of the remaining non-narrow road candidate navigation route(s), and based on the comparison result and a preset condition, prompt the user to switch to one or more better candidate navigation routes to skip candidate navigation route(s) that includes narrow road(s).

For example, the preset condition may include an estimated time difference threshold and/or an estimated distance difference threshold. Among them, the estimated time difference threshold and/or estimated distance difference threshold can be dynamically set based on the user's historical choices of navigation routes, current road conditions, etc. Alternatively, the estimated time difference threshold and/or estimated distance difference threshold can be specified by the user.

For example, if the absolute value of the difference between the estimated time of a remaining non-narrow candidate navigation route and the estimated time of the selected candidate navigation route is less than (or less than or equal to) the estimated time difference threshold, the remaining non-narrow candidate navigation route can be identified as a better candidate navigation route.

For another example, if the absolute value of the difference between the estimated distance of a remaining non-narrow candidate navigation route and the estimated distance of the selected candidate navigation route is less than (or less than or equal to) the estimated distance difference threshold, the remaining non-narrow candidate navigation route can be identified as a better candidate navigation route.

According to an embodiment of the present invention, the car meeting assistance module 102 may be configured to perform the car meeting assistance prompting based at least in part on the car meeting status relative to a narrow road of the current vehicle and/or the opposite vehicle and car meeting point information of the narrow road. Wherein, the car meeting point information refers to whether there is a car meeting point on the narrow road, a location of the car meeting point, a distance to the car meeting point, etc., and the car meeting point information may be maintained in backend of the navigation system. Moreover, the car meeting status of the vehicle may refer to one of the following: whether the vehicle is approaching the narrow road, whether the vehicle is already on the narrow road, whether the vehicle is already off the narrow road, and so on.

For example, the car meeting assistance module 102 may be configured to, upon the current vehicle is about to enter into a narrow road, identify whether a vehicle traveling in the opposite direction (i.e., an "opposite vehicle") is approaching or is already on the narrow road, and based on the identified opposite vehicle and whether there is a car meeting point between the current vehicle and the opposite vehicle, to perform the car meeting assistance prompt. Specifically, the car meeting assistance module 102 may determine whether there is a car meeting point between the current vehicle and the opposite vehicle when the presence of the opposite vehicle is identified. And, the car meeting assistance module 102 may be configured to (1) if there is no car meeting point, prompt the user to wait in place until the opposite vehicle exits the narrow road, and then travel to the narrow road; and (2) if there is a car meeting point, when the current vehicle and the opposite vehicle reach the car meeting point, prompt the current vehicle and the opposite vehicle to meet at the car meeting point.

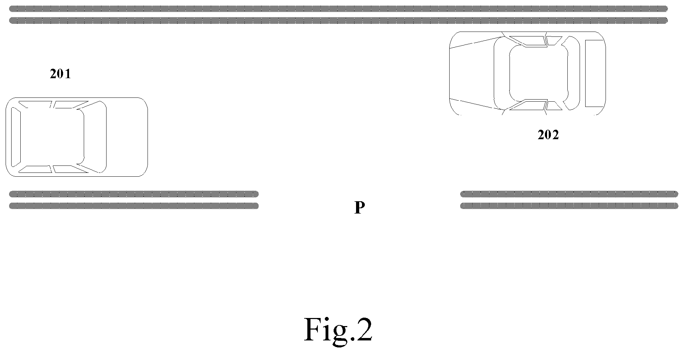

For example, for better illustration, Figure 2 illustrates a situation where a car meeting point exists on a narrow road according to an embodiment of the present invention. In this case, the car meeting assistance module 102 may prompt the current vehicle 201 and the opposite vehicle 202 to have a car meeting at the car meeting point P. It is fully understood by those skilled in the art that the narrow road as well as the car meeting point illustrated in Figure 2 are merely schematic and are not intended to impose any limitations on the shape, size, length, etc. of the narrow road and the car meeting point.

In practice, it is likely that the current vehicle will, for a variety of reasons, travels into narrow road(s) where there is no car meeting point. For example, the navigation system may fail due to network connection abnormality, thus failing to give any prompt of the narrow road. Another example is that the user does not pay attention to or comply with the prompt from the navigation system to wait before entering into the narrow road. In another example, a road may be narrowed due to unexpected reasons (e.g., a sudden car accident, mudslide, etc.), but the information in the backend of the navigation system has not been updated yet, resulting in the failure to promptly identify the road as a narrow road. In this scenario, the current vehicle is likely to encounter the opposite vehicle on a narrow road without a car meeting point, which may cause congestion for both drivers due to the inability to determine each other's behavior.

According to another embodiment of the present invention, the car meeting assistance module 102 can be configured to, in the event that the current vehicle has entered into the narrow road and no meeting point between the current vehicle and the opposite vehicle is identified, providing a reverse prompt to one of the current vehicle and the opposite vehicle based on a difference between a reverse distance required for the current vehicle to exit the narrow road or reverse to a previous meeting point and a reverse distance required for the opposite vehicle to exit the narrow road or reverse to a previous meeting point.

For example, the car meeting assistance module 102 can, based on a reverse distance from the current vehicle to the entrance on the current vehicle side of the narrow road or to the previous car meeting point on the current vehicle side of the narrow road, and a reverse distance from the opposite vehicle to the entrance on the opposite vehicle side of the narrow road or to the previous car meeting point on the opposite vehicle side of the narrow road, provide a reverse prompt to the vehicle with a shorter reverse distance between the current vehicle and the opposite vehicle. Optionally, the car meeting assistance module 102 can inform the vehicle with a larger reverse distance between the current vehicle and the opposite vehicle that the opposite vehicle needs to reverse, thereby enabling the user of the current vehicle to slow down.

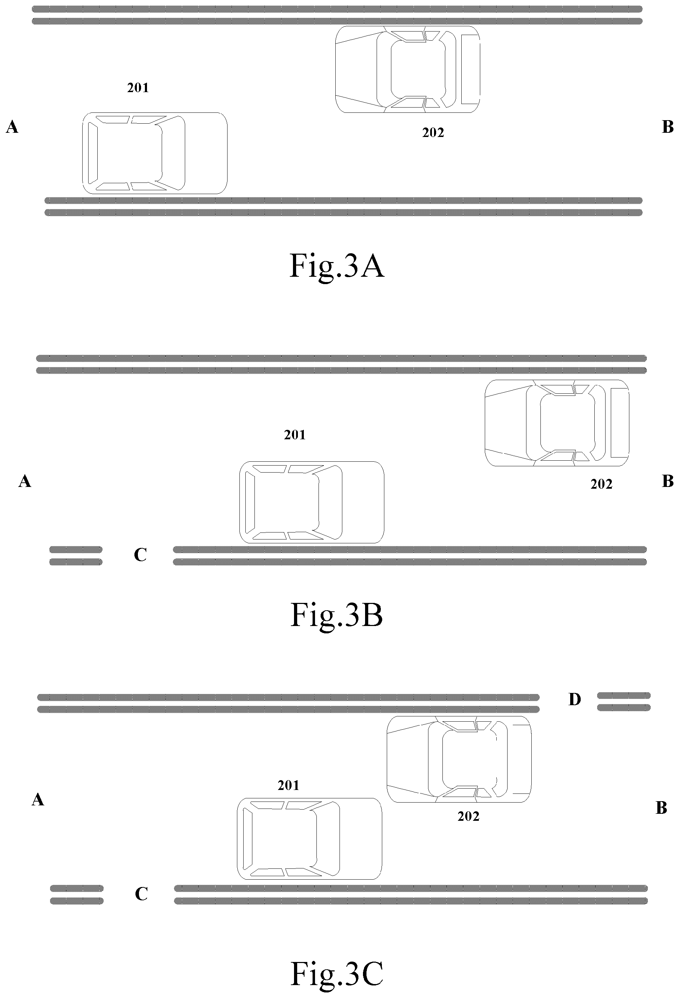

For example, for better illustration, Figure 3A-Figure 3C illustrate a situation where a current vehicle and an opposite vehicle have entered into a narrow road and there is no car meeting point between the current vehicle and the opposite vehicle, according to one embodiment of the present invention; Among them, the specific distances in the following examples are only illustrative and not intended to be limiting.

Referring to Figure 3A, it shows the situation where there is no car meeting point on the whole narrow road and the current vehicle is notified to reverse. Wherein, if the reverse distance (e.g., 2 meters) from the current vehicle 201 to the entrance A of the narrow road is less than the reverse distance (e.g., 3 meters) from the opposite vehicle 202 to the entrance B of the narrow road, the current vehicle 201 is notified to reverse and exit the narrow road.

Referring to Figure 3B, it shows the situation where there is one car meeting point on the whole narrow road and the opposite vehicle is notified to reverse. Wherein, if the reverse distance (e.g., 2 meters) from the current vehicle 201 to the previous car meeting point C of the narrow road is greater than the reverse distance (e.g., 1 meter) from the opposite vehicle 202 to the entrance B of the narrow road, the opposite vehicle 202 is notified to reverse and exit the narrow road.

Referring to Figure 3C, it shows the situation where there are more than one car meeting point on the whole narrow road and the opposite vehicle is notified to reverse. Wherein, if the reverse distance (e.g., 2 meters) from the current vehicle 201 to the previous car meeting point C of the narrow road is greater than the reverse distance (e.g., 1 meter) from the opposite vehicle 202 to the previous car meeting point D of the narrow road, the opposite vehicle 202 is notified to reverse in order to back to that meeting point D in order to facilitate the car meeting between the two vehicles.

According to another embodiment of the present invention, if there are following vehicles after the current vehicle, the reverse distance of the current vehicle side is an accumulation of the reverse distances of the current vehicle and each of the one or more following vehicles. For example, if the current vehicle is followed by a following vehicle 1 and a following vehicle 2, the reverse distance of the current vehicle side to the entrance of the narrow road may be calculated as the reverse distance from the current vehicle to that entrance + the reverse distance from following vehicle 1 to that entrance + the reverse distance from following vehicle 2 to that entrance. Similarly, if there are following vehicles after the opposite vehicle, the reverse distance of the opposite vehicle side is an accumulation of the reverse distances of the opposite vehicle and each of the one or more following vehicles.

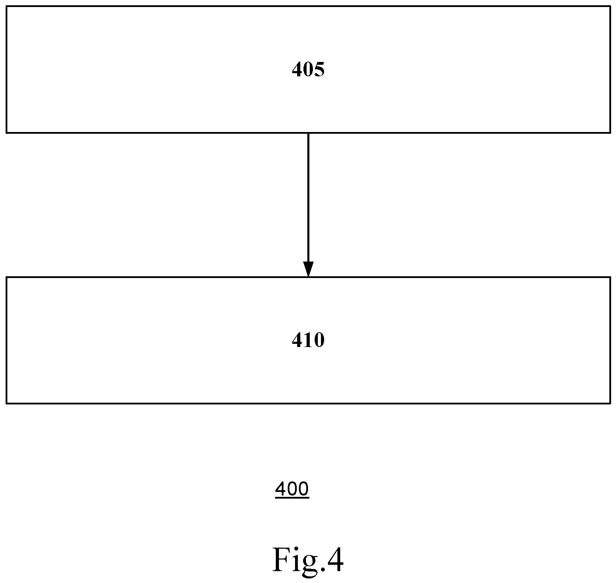

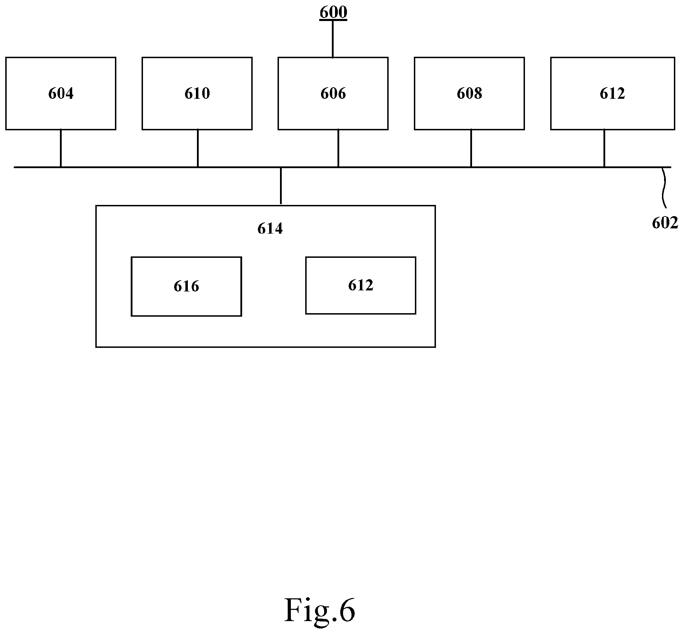

Figure 4 illustrates a flowchart of a full roadway car meeting assistance method 400 according to one embodiment of the present invention. For example, the method 400 may be implemented within at least one processor (e.g., processor 604 of Figure 6), which can be located in a mobile device, on-vehicle computer system, remote server, or a combination thereof. Of course, in various aspects of the present invention, method 400 can also be implemented by any suitable device capable of performing related operations.

Referring to Figure 4, the full roadway car meeting assistance method 400 mainly includes two stages 405 and 410.

At 405, at least partially based on narrow road information, one or more candidate navigation routes are provided for the user to select, and a comparison is made between the candidate navigation route selected by the user that includes narrow road(s) and the remaining non-narrow road candidate navigation routes among the one or more candidate navigation routes that does not include narrow road(s) to promptbetter candidate navigation route(s). Among them, the narrow road information may include a length of a narrow road, historical average passing through time, historical median passing through time, historical minimum passing through time, or historical maximum passing through time.

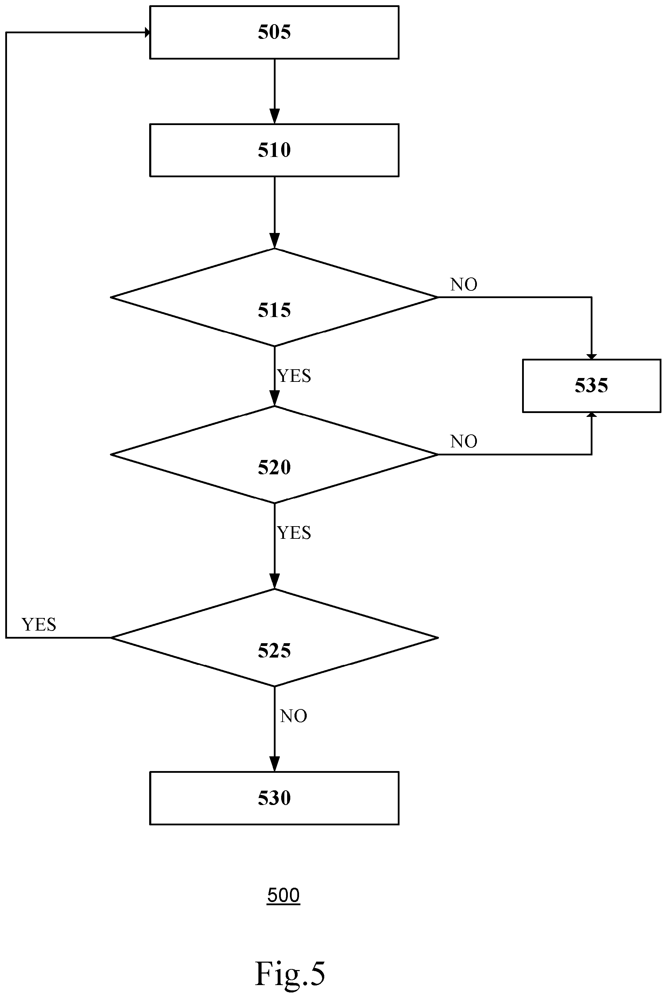

Figure 5 further illustrates a method 500 for detailed description of stage 405 according to one embodiment of the present invention.

At 505, one or more candidate navigation routes are provided for user to select, based, at least in part, on narrow road information, each candidate navigation route including at least estimated time and/or estimated distance of the candidate navigation route.

At 510, the user's selection of one candidate navigation route from the one or more candidate navigation routes is received. For example, the user can make the selection based on information such as estimated time and/or estimated distance for each of the one or more candidate navigation routes.

At 515, it is determined that whether the selected candidate navigation route includes narrow road(s) and whether there are any remaining non-narrow road candidate navigation route(s) among the one or more candidate navigation routes that does not include narrow road(s). If yes, proceed to 520, and if no, proceed to 535.

At 520, the selected candidate navigation route is compared to the remaining no-narrow road candidate navigation route(s) to determine whether one or more better candidate navigation routes exist among the remaining no-narrow road candidate navigation route(s). Specifically, the estimated time and/or estimated distance of the candidate navigation route selected by the user can be compared with the estimated time and/or estimated distance of the remaining road candidate navigation route(s) that does not include narrow road(s). Among them, the one or more better candidate navigation routes may refer to candidate navigation routes whose estimated time and/or estimated distance minus the estimated time and/or estimated distance of the selected candidate navigation route is less than (less than or equal to) the estimated time difference threshold and/or estimated distance difference threshold. If yes, proceed to 525, and if no, proceed to 535.

At 525, it is determined that if there are multiple better candidate navigation routes. If yes, return to 505, where the multiple better candidate navigation routes are selected as candidate navigation routes in 505. If no, that is, if there is only one better candidate navigation route, proceed to 530.

At 530, the better candidate navigation route is used for navigation.

At 535, the selected candidate navigation route is used for navigation.

From this, it can be seen that through stage 405, users can be assisted in selecting navigation route(s) not including narrow road(s).

At 410, a car meeting assistance prompt is provided based at least in part on a car meeting status relative to a narrow road of a current vehicle and/or an opposite vehicle and car meeting point information of the narrow road. Wherein the car meeting point information refers to whether there is a car meeting point on the narrow road, a location of the car meeting point, a distance to the car meeting point, etc. Moreover, the car meeting status of the vehicle may refer to one of the following: whether the vehicle is approaching the narrow road, whether the vehicle is already on the narrow road, whether the vehicle is already off the narrow road, and so on.

For example, stage 410 may include: upon the current vehicle is about to enter into a narrow road, identifying whether an opposite vehicle is approaching or is already on the narrow road, and based on the identified opposite vehicle and whether there is a car meeting point between the current vehicle and the opposite vehicle, to perform the car meeting assistance prompt.

As another example, stage 410 may include: in the event the current vehicle has entered into the narrow road and no meeting point between the current vehicle and the opposite vehicle is identified, providing a reverse prompt to one of the current vehicle and the opposite vehicle based on a difference between a reverse distance required for the current vehicle to exit the narrow road or reverse to a previous meeting point and a reverse distance required for the opposite vehicle to exit the narrow road or reverse to a previous meeting point.

In the present invention, stage 405 and stage 410 may be implemented separately rather than having to be performed as a whole. For example, stage 405 may be individually applied to a route recommendation scenario, and stage 410 may be individually applied to a car meeting scenario.

Figure 6 illustrates a block diagram of an exemplary computing device that is an example of a hardware device that may be applied to aspects of the present invention, according to an embodiment of the present invention.

Referring to Figure 6, a computing device 600 will now be described that is an example of a hardware device that may be applied to aspects of the present invention. The computing device 600 may be any machine that may be configured to implement processing and/or computing, and may be, but is not limited to, a workstation, a server, a desktop computer, a laptop computer, a tablet computer, a personal digital processing, a smartphone, an on-vehicle computer, or any combination thereof. The various methods/apparatuses/servers/client devices mentioned above can be fully or at least partially implemented by computing device 600 or similar devices or systems.

Computing device 600 may include components that can be connected or communicate via one or more interfaces and bus 602. For example, computing device 600 may include a bus 602, one or more processors 604, one or more input devices 606, and one or more output devices 608. The one or more processors 604 may be any type of processor and may include, but are not limited to, one or more general-purpose processors and/or one or more specialized processors (e.g. specialized processing chips). The input device 606 can be any type of device capable of inputting information to a computing device and can include, but is not limited to, a mouse, keyboard, touch screen, microphone, and/or remote controller. The output device 608 can be any type of device capable of presenting information and can include, but is not limited to, a display, speakers, video/audio output terminals, vibrators, and/or printers. The computing device 600 may also include or be connected to a non-transitory storage device 610, which may be any storage device that is non-transitory and capable of storing data, and which may include but is not limited to disk drives, optical storage devices, solid-state storage, floppy disks, floppy disks, hard disks, magnetic tapes or any other magnetic media, optical disks or any other optical media, ROM (Read Only Memory), RAM (Random Access Memory), cache memory and/or any storage chip or cassette tape, and/or any other medium from which a computer can read data, instructions and/or code. The non-transitory storage device 610 can be separated from the interface. The non-transitory storage device 610 may have data/instructions/code for implementing the above methods and steps. Computing device 600 may also include communication device 612. The communication device 612 may be any type of device or system capable of communicating with internal devices and/or with a network, and may include but not be limited to modems, network cards, infrared communication devices, wireless communication devices, and/or chipsets, such as Bluetooth devices, IEEE 1302.11 devices, WiFi devices, WiMax devices, cellular communication devices, and/or similar devices.

When computing device 600 is used as an on-vehicle device, it can also be connected to external devices, such as GPS receivers, sensors for sensing different environmental data (such as acceleration sensors, wheel speed sensors, gyroscopes, etc.). In this way, computing device 600 can receive positioning data and sensor data indicating the condition of the vehicle, for example. When computing device 600 is used as an on-vehicle device, it can also be connected to other devices used to control the driving and operation of the vehicle, such as engine systems, windshield wipers, antilock braking systems, etc.).

In addition, the non-transitory storage device 610 may have map information and software components, so that the processor 604 can implement route guidance processing. Additionally, the output device 606 may include a display for displaying a map, displaying a locator marker for the vehicle, and displaying an image indicative of the vehicle's traveling condition. The output device 606 may also include a speaker or headphone jack for audio guidance.

Bus 602 may include, but is not limited to, Industrial Standard Architecture (ISA) bus, Microchannel Architecture (MCA) bus, Enhanced ISA (EISA) bus, Video Electronics Standards Association (VESA) local bus, and Peripheral Component Interconnect (PCI) bus. Specifically, for on-vehicle devices, bus 602 may also include a Controller Area Network (CAN) bus or other structures designed for automotive applications.

The computing device 600 may also include a working memory 614, which may be any type of working memory capable of storing instructions and/or data that are beneficial for the operation of the processor 604 and may include, but are not limited to, random access memory and/or read-only storage devices.

Software components can be located in working memory 614, including but not limited to operating system 616, one or more application programs 618, drivers, and/or other data and code. The instructions for implementing the above methods and steps may be included in one or more application programs 618, and the modules/units/components of the various devices/servers/client devices mentioned above may be implemented by the processor 604 reading and executing the instructions of the one or more application programs 618.

It should also be recognized that changes can be made according to specific needs. For example, customized hardware can also be used, and/or specific components can be implemented in hardware, software, firmware, middleware, microcode, hardware description voice, or any combination thereof. In addition, connections with other computing devices, such as network input/output devices, can be used. For example, some or all of the disclosed methods and devices can be implemented using logic and algorithms according to the present invention through programming hardware (such as programmable logic circuits including field programmable gate arrays (FPGAs) and/or programmable logic arrays (PLAs)) with assembly language or hardware programming languages (such as VERILOG, VHDL, C++).

Although various aspects of the present invention have been described with reference to the accompanying drawings, the above methods, systems, and devices are merely examples, and the scope of the present invention is not limited to these aspects, but only by the appended claims and their equivalents. Various components can be omitted or replaced by equivalent components. Additionally, the steps can also be implemented in a sequence different from that described in the present invention. In addition, various components can be combined in various ways. It is also important that with the development of technology, many of the components described can be replaced by equivalent components that appear later.

## Claims

1. A car meeting assistance method, comprising:
(a) providing one or more candidate navigation routes for user selection based, at least in part, on narrow road information, wherein the narrow road information includes one or more of a length of a narrow road, historical average passing through time, historical median passing through time, historical minimum passing through time, or historical maximum passing through time; and
(b) prompting one or more better candidate navigation routes based on a comparison between the candidate navigation route selected by the user that includes narrow road(s) and the remaining candidate navigation route(s) of the one or more candidate navigation routes that does not include narrow road(s).

2. The method of claim 1, further comprising:
(c) providing a car meeting assistance prompt based, at least in part, on a car meeting status relative to a narrow road of a current vehicle and/or an opposite vehicle and car meeting point information of the narrow road;
wherein, the car meeting point information refers to at least one of whether there is a car meeting point on the narrow road, a location of the car meeting point, and a distance to the car meeting point, and the car meeting status of the vehicle refers to at least one of whether the vehicle is approaching the narrow road, whether the vehicle is already on the narrow road, and whether the vehicle is already off the narrow road.

3. The method of claim 1, wherein step (b) further comprises:
comparing estimated time and/or estimated distance of the candidate navigation route selected by the user with estimated time and/or estimated distance of the remaining road candidate navigation route(s) that does not include narrow road(s); and
prompting the one or more better candidate navigation routes based on the comparison result and a preset condition, wherein the preset condition comprises an estimated time difference threshold and/or an estimated distance difference threshold.

4. The method of claim 2, wherein step (c) further comprises:
upon the current vehicle is about to enter into a narrow road, identifying whether an opposite vehicle is approaching the narrow road or is already on the narrow road; and
providing the car meeting assistance prompt based on the identified opposite vehicle and whether there is a meeting point between the current vehicle and the opposite vehicle.

5. The method of claim 2, wherein step (c) further comprises:
in the event the current vehicle has entered into the narrow road and no meeting point between the current vehicle and the opposite vehicle is identified, providing a reverse prompt to one of the current vehicle and the opposite vehicle based on a difference between a reverse distance required for the current vehicle to exit the narrow road or reverse to a previous meeting point and a reverse distance required for the opposite vehicle to exit the narrow road or reverse to a previous meeting point.

6. The method of claim 5, wherein if there is one or more following vehicles after the current vehicle or the opposite vehicle, the reverse distance of the current vehicle side or the opposite vehicle side is an accumulation of the reverse distances of the current vehicle or the opposite vehicle and each of the one or more following vehicles.

7. A car meeting assistance system, comprising:
navigation route recommendation module configured to:
(a) provide one or more candidate navigation routes for user selection based, at least in part, on narrow road information, wherein the narrow road information includes one or more of a length of a narrow road, historical average passing through time, historical median passing through time, historical minimum passing through time, or historical maximum passing through time; and
(b) prompt one or more better candidate navigation routes based on a comparison between the candidate navigation route selected by the user that includes narrow road(s) and the remaining candidate navigation route(s) of the one or more candidate navigation routes that does not include narrow road(s).

8. The system of claim 7, further comprising car meeting assistance module configured to:
(c) provide a car meeting assistance prompt based, at least in part, on a car meeting status relative to a narrow road of a current vehicle and/or an opposite vehicle and car meeting point information of the narrow road;
wherein, the car meeting point information refers to at least one of whether there is a car meeting point on the narrow road, a location of the car meeting point, and a distance to the car meeting point, and the car meeting status of the vehicle refers to at least one of whether the vehicle is approaching the narrow road, whether the vehicle is already on the narrow road, and whether the vehicle is already off the narrow road.

9. The system of claim 7 wherein (b) further comprises:
comparing estimated time and/or estimated distance of the candidate navigation route selected by the user with estimated time and/or estimated distance of the remaining road candidate navigation route(s) that does not include narrow road(s); and
prompting the one or more better candidate navigation routes based on the comparison result and a preset condition, wherein the preset condition comprises an estimated time difference threshold and/or an estimated distance difference threshold.

10. The system of claim 8, wherein (c) further comprises:
upon the current vehicle is about to enter into a narrow road, identifying whether an opposite vehicle is approaching the narrow road or is already on the narrow road; and
providing the car meeting assistance prompt based on the identified opposite vehicle and whether there is a meeting point between the current vehicle and the opposite vehicle.
